# EUROPÄISCHE PATENTSCHRIFT

(11) **EP 4 268 439 B1**
(45) Veröffentlichungstag und Bekanntmachung des Hinweises auf die Patenterteilung: **29.01.2025**
(21) Anmeldenummer: 21839471.6
(22) Anmeldetag: 15.12.2021
(51) Int. Cl.: H04L 67/563, H04L 69/08, H04L 69/18

(54) **TECHNISCHE ANLAGE UND ZWISCHENGERÄT FÜR EINE TECHNISCHE ANLAGE**
TECHNICAL INSTALLATION AND INTERMEDIARY DEVICE FOR A TECHNICAL INSTALLATION
INSTALLATION TECHNIQUE ET DISPOSITIF INTERMÉDIAIRE POUR UNE INSTALLATION TECHNIQUE

(30) Priorität: 29.01.2021 DE 102021200832
(43) Veröffentlichungstag der Anmeldung: 01.11.2023
(73) Patentinhaber: Siemens Mobility GmbH, 81739 München (DE)
(72) Erfinder: USER, Yasin, 38124 Braunschweig (DE); WISCHY, Markus Alexander, 38120 Braunschweig (DE)
(74) Vertreter: Siemens Patent Attorneys
(86) Internationale Anmeldenummer: PCT/EP2021/085874
(87) Internationale Veröffentlichungsnummer: WO 2022/161692

(56) Entgegenhaltungen:
- US-A1- 2012 203 825
- -: "Gateway (telecommunications)", 28 January 2021 (2021-01-28), pages 1 - 4, XP055904181, Retrieved from the Internet <URL:https://en.wikipedia.org/w/index.php?title=Gateway_(telecommunications)&oldid=1003343894> [retrieved on 20220322]

## Beschreibung

Die Erfindung bezieht sich auf technische Anlagen, beispielsweise auf eisenbahntechnische Anlagen, und Zwischengeräte für technische Anlagen.

Bei vielen technischen Anlagen, insbesondere auch eisenbahntechnischen Anlagen, besteht das Problem, mit möglichst wenig Aufwand ein vorgegebenes Maß an signaltechnischer Sicherheit zur erreichen oder im Falle bereits bestehender Anlagen die signaltechnische Sicherheit durch Nachrüsten auf ein vorgegebenes Maß zu erhöhen, sofern letztgenanntes Maß an Sicherheit noch nicht erreicht wird. Dieses Problem stellt sich insbesondere dann, wenn die technische Anlage Komponenten, beispielsweise Feldgeräte umfasst, die signaltechnisch unverschlüsselt und/oder ungesichert arbeiten.

Die US 2012/203825 Al beschreibt Systeme und Verfahren zur Cache-Weiterleitung zwischen einer Vielzahl von Zwischengeräten. Die Wikipedia-Veröffentlichung Gateway (telecommunications)", 28. Januar 2021, XP055904181, beschreibt die Funktion eines Netzwerk- und eines IoT-Gateways.

Der Erfindung liegt die Aufgabe zugrunde, ein Zwischengerät anzugeben, das mit Blick auf die Aus- oder Nachrüstung technischer Anlagen besonders geeignet ist.

Diese Aufgabe wird erfindungsgemäß durch ein Zwischengerät mit den Merkmalen gemäß Patentanspruch 1 gelöst. Vorteilhafte Ausgestaltungen des erfindungsgemäßen Zwischengeräts sind in Unteransprüchen angegeben.

Danach ist erfindungsgemäß vorgesehen: ein Zwischengerät mit einer ersten internetprotokollkompatiblen Anschlussseite zum Anschluss an zumindest ein internes Kommunikationsendgerät und einer zweiten internetprotokollkompatiblen Anschlussseite zum Anschluss an ein externes Kommunikationsnetz oder eine externe Kommunikationsleitung. Das Zwischengerät ist derart ausgestaltet, dass es bei Eingang eines internetprotokollkompatiblen Eingangsdatenpakets, das von dem zumindest einen internen Kommunikationsendgerät stammt und an ein an das externe Kommunikationsnetz angeschlossenes, externes internetprotokollkompatibles Kommunikationsendgerät adressiert ist, die Internetprotokolladresse des internen Kommunikationsendgeräts aus dem Eingangsdatenpaket ausliest, das Eingangsdatenpaket einer Protokollumwandlung unterzieht, ein protokollumgewandeltes Ausgangsdatenpaket erzeugt, das als Internetprotokolladresse des Sendegeräts die Internetprotokolladresse des internen Kommunikationsendgeräts trägt, und das protokollumgewandelte Ausgangsdatenpaket an das externe Kommunikationsendgerät sendet, und bei Eingang eines internetprotokollkompatiblen Eingangsdatenpakets, das von einem an der zweiten Anschlussseite angeschlossenen externen Kommunikationsendgerät stammt und an das zumindest eine an die erste Anschlussseite angeschlossene interne Kommunikationsendgerät adressiert ist, die Internetprotokolladresse des externen Kommunikationsendgeräts aus dem Eingangsdatenpaket ausliest, das Eingangsdatenpaket einer Protokollumwandlung unterzieht, ein protokollumgewandeltes Ausgangsdatenpaket erzeugt, das als Internetprotokolladresse des Sendegeräts die Internetprotokolladresse des externen Kommunikationsendgeräts trägt, und das protokollumgewandelte Ausgangsdatenpaket an das interne Kommunikationsendgerät sendet.

Ein wesentlicher Vorteil des erfindungsgemäßen Zwischengeräts besteht darin, dass es eine Protokollumsetzung durchführt und es somit im Rahmen der Protokollumsetzung möglich ist, auf der zweiten Anschlussseite ein höheres Maß an signaltechnischer Sicherheit zu gewährleisten, als die an der ersten Anschlussseite angeschlossenen Komponenten ermöglichen. Wird das Zwischengerät somit "nah" im Bereich der an die erste Anschlussseite angeschlossnen Komponenten platziert, so lässt sich die Gefahr einer externen Manipulation der Datenübertragung reduzieren.

Ein weiterer wesentlicher Vorteil des erfindungsgemäßen Zwischengeräts besteht darin, dass es für die angeschlossenen Komponenten transparent ist, und zwar wegen der Verwendung der in Eingangsdatenpaketen enthaltenen Internetprotokolladressen als Senderadressen (Ursprungsadressen und Zieladressen) in den Ausgangsdatenpaketen, und somit beispielsweise im Falle einer Nachrüstung bestehender technischer Anlagen der Nachrüstaufwand minimal ist.

Vorteilhaft ist es, wenn das Zwischengerät einen Proxy bildet, bei dem die erste und zweite Anschlussseite zum Anschluss an ein Ethernet-Netzwerk ausgebildet sind.

Das Zwischengerät arbeitet vorzugsweise im promiskuitiven Modus und ist durch Spiegeln von Internetprotokolladressen von der ersten auf die zweite Anschlussseite und umgekehrt für beide Anschlussseiten transparent.

Auch wird es als vorteilhaft angesehen, wenn das Zwischengerät im Rahmen der Protokollumwandlung ungesicherte Eingangsdatenpakete, die an der ersten Anschlussseite eingehen, in gesicherte Ausgangsdatenpakete umwandelt und gesicherte Eingangsdatenpakete, die an der zweiten Anschlussseite eingehen, in ungesicherte Ausgangsdatenpakete umwandelt.

Alternativ oder zusätzlich kann das Zwischengerät im Rahmen der Protokollumwandlung in vorteilhafter Weise unverschlüsselte Eingangsdatenpakete, die an der ersten Anschlussseite eingehen, in verschlüsselte Ausgangsdatenpakete umwandeln und verschlüsselte Eingangsdatenpakete, die an der zweiten Anschlussseite eingehen, in unverschlüsselte Ausgangsdatenpakete umwandeln.

Besonders vorteilhaft ist es, wenn das Zwischengerät im Rahmen der Protokollumwandlung eine Sicherung oder Verschlüsselung sowie eine Entsicherung oder Entschlüsselung von Eingangsdatenpaketen in der OSI-Schicht 5 oder höher durchführt.

Bei einer als besonders vorteilhaft angesehenen Ausführungsvariante ist vorgesehen, dass das Zwischengerät im Rahmen der Protokollumwandlung TCP(Transmission Control Protocol)- oder UDP(User Datagram Protocol)-kompatible Eingangsdatenpakete, die an der ersten Anschlussseite eingehen, in TLS(Transport Layer Security)-kompatible Ausgangsdatenpakete umwandelt und TLS-kompatible Eingangsdatenpakete, die an der zweiten Anschlussseite eingehen, in TCP- oder UDP-kompatible Ausgangsdatenpakete umwandelt.

Bezüglich Adresszuordnungsanfragen wird es als vorteilhaft angesehen, wenn das Zwischengerät im Rahmen der Protokollumwandlung Adresszuordnungsanfragen gemäß "Address Resolution Protocol", ARP, von internen Kommunikationsendgeräten als eigene Adresszuordnungsanfragen an externe Kommunikationsendgeräte weiterleitet, sofern die in der jeweiligen Adresszuordnungsanfrage enthaltene Internetprotokolladresse und/oder zugehörige Geräteadresse dem Zwischengerät unbekannt ist, und Adresszuordnungsanfragen von externen Kommunikationsendgeräten als eigene Adresszuordnungsanfragen an die internen Kommunikationsendgeräte weiterleitet, sofern die in der jeweiligen Adresszuordnungsanfrage enthaltene Internetprotokolladresse und/oder zugehörige Geräteadresse dem Zwischengerät unbekannt ist.

Das Zwischengerät ist vorzugsweise selbstkonfigurierend und ermittelt die an der ersten Anschlussseite angeschlossenen internen Kommunikationsendgeräte und deren Internetprotokolladressen vorzugsweise auf der Basis selbst generierter Adresszuordnungsanfragen selbst.

Vorteilhaft ist es, wenn Anschlussports (Netzwerkports) der ersten und zweiten Anschlussseite jeweils derart ausgestaltet sind, dass sie als Server- oder Client-Port arbeiten können.

Die Erfindung bezieht sich außerdem auf eine technische Anlage mit einer ersten Komponente und einer davon räumlich getrennten zweiten Komponente, die jeweils ein internetprotokollkompatibles Kommunikationsendgerät aufweisen und über ein externes Kommunikationsnetz oder eine externe Kommunikationsleitung in Verbindung stehen, wobei die technische Anlage zudem ein erfindungsgemäßes Zwischengerät umfasst, welches datenübertragungsmäßig zwischen die Kommunikationsendgeräte der ersten und zweiten Komponente angeschlossen ist.

Bezüglich der Vorteile der erfindungsgemäßen Anlage und bezüglich vorteilhafter Ausgestaltungen der erfindungsgemäßen Anlage sei auf die obigen Ausführungen im Zusammenhang mit dem erfindungsgemäßen Zwischengerät und dessen vorteilhafter Ausgestaltungen verwiesen.

Die technische Anlage ist vorzugsweise eine eisenbahntechnische Anlage.

Bei der letztgenannten Variante ist die erste Komponente vorzugsweise ein streckenseitiges eisenbahntechnisches Feldgerät, dessen Kommunikationsendgerät an eine erste Anschlussseite des Zwischengeräts angeschlossen ist.

Die zweite Komponente ist vorzugsweise ein streckenseitiges eisenbahntechnisches Zentralgerät, insbesondere ein Stellwerk, dessen Kommunikationsendgerät an eine zweite Anschlussseite des Zwischengeräts angeschlossen ist.

Alternativ ist es vorteilhaft, wenn die technische Anlage ein Eisenbahnschienenfahrzeug ist.

Die erste Komponente ist bei der letztgenannten Variante vorzugsweise eine erste schienenfahrzeugseitige Einrichtung, deren Kommunikationsendgerät an eine erste Anschlussseite des Zwischengeräts angeschlossen ist.

Die zweite Komponente ist bei der letztgenannten Variante vorzugsweise eine zweite schienenfahrzeugseitige Einrichtung, insbesondere ein Fahrzeugsteuergerät, dessen Kommunikationsendgerät an eine zweite Anschlussseite des Zwischengeräts angeschlossen ist.

Die Erfindung bezieht sich außerdem auf ein Verfahren zum Betreiben eines Zwischengeräts, das mit einer ersten internetprotokollkompatiblen Anschlussseite an zumindest ein internes Kommunikationsendgerät und mit einer zweiten internetprotokollkompatiblen Anschlussseite an ein externes Kommunikationsnetz oder eine externe Kommunikationsleitung angeschlossen ist. Erfindungsgemäß ist vorgesehen, dass bei Eingang eines internetprotokollkompatiblen Eingangsdatenpakets, das von dem zumindest einen internen Kommunikationsendgerät stammt und an ein an das externe Kommunikationsnetz angeschlossenes, externes internetprotokollkompatibles Kommunikationsendgerät adressiert ist, die Internetprotokolladresse des internen Kommunikationsendgeräts aus dem Eingangsdatenpaket ausgelesen wird, das Eingangsdatenpaket einer Protokollumwandlung unterzogen wird, ein protokollumgewandeltes Ausgangsdatenpaket erzeugt wird, das als Internetprotokolladresse des Sendegeräts die Internetprotokolladresse des internen Kommunikationsendgeräts trägt, und das protokollumgewandelte Ausgangsdatenpaket an das externe Kommunikationsendgerät gesendet wird. Bei Eingang eines internetprotokollkompatiblen Eingangsdatenpakets, das von einem an der der zweiten Anschlussseite angeschlossenen externen Kommunikationsendgerät stammt und an das zumindest eine an die erste Anschlussseite angeschlossene interne Kommunikationsendgerät adressiert ist, wird die Internetprotokolladresse des externen Kommunikationsendgeräts aus dem Eingangsdatenpaket ausgelesen, das Eingangsdatenpaket einer Protokollumwandlung unterzogen, ein protokollumgewandeltes Ausgangsdatenpaket erzeugt, das als Internetprotokolladresse des Sendegeräts die Internetprotokolladresse des externen Kommunikationsendgeräts trägt, und das protokollumgewandelte Ausgangsdatenpaket an das interne Kommunikationsendgerät gesendet.

Bezüglich der Vorteile des erfindungsgemäßen Verfahrens und bezüglich vorteilhafter Ausgestaltungen des erfindungsgemäßen Verfahrens sei auf die obigen Ausführungen im Zusammenhang mit dem erfindungsgemäßen Zwischengerät und dessen vorteilhafter Ausgestaltungen verwiesen.

Die Erfindung wird nachfolgend anhand von Ausführungsbeispielen näher erläutert; dabei zeigen beispielhaft
- Figur 1: ein erstes Ausführungsbeispiel für eine erfindungsgemäße technische Anlage, die mit einem Ausführungsbeispiel für ein erfindungsgemäßes Zwischengerät ausgestattet ist,
- Fig. 2-7: eine bevorzugte Arbeitsweise des Zwischengeräts gemäß Figur 1, und
- Figur 8: ein zweites Ausführungsbeispiel für eine erfindungsgemäße technische Anlage, die mit einem Ausführungsbeispiel für ein erfindungsgemäßes Zwischengerät ausgestattet ist.

In den Figuren werden der Übersicht halber für identische oder vergleichbare Komponenten stets dieselben Bezugszeichen verwendet.

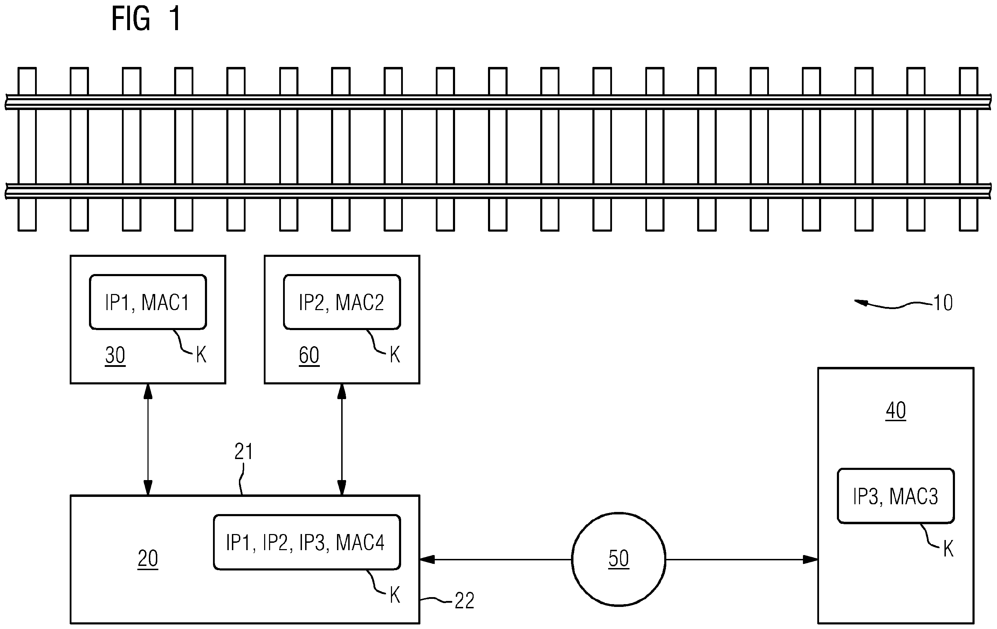

Die Figur 1 zeigt ein erstes Ausführungsbeispiel für eine erfindungsgemäße technische Anlage 10, die mit einem Ausführungsbeispiel für ein erfindungsgemäßes Zwischengerät 20 ausgestattet ist.

Bei dem Ausführungsbeispiel gemäß Figur 1 handelt es sich bei der technischen Anlage 10 um eine Eisenbahnanlage, die unter anderem als erste Komponente ein erstes streckenseitiges eisenbahntechnisches Feldgerät 30, vorzugsweise in Form eines Achszählers, einer Signaleinrichtung oder einer Weiche, und als zweite Komponente ein streckenseitiges eisenbahntechnisches Zentralgerät, vorzugsweise in Form eines Stellwerks 40, umfasst.

Das erste streckenseitige Feldgerät 30 ist über das Zwischengerät 20 und ein Kommunikationsnetz 50, insbesondere einen Kommunikationsbus, oder eine Kommunikationsleitung mit dem Stellwerk 40 verbunden und kann von diesem Steuerbefehle erhalten und/oder an dieses Sensorsignale übermitteln.

Bei dem Ausführungsbeispiel gemäß Figur 1 ist zusätzlich zu dem ersten streckenseitigen Feldgerät 30 zumindest ein zweites streckenseitiges eisenbahntechnisches Feldgerät 60 vorhanden, das über das zwischengeschaltete Zwischengerät 20 und das Kommunikationsnetz 50 ebenfalls an das Stellwerk 40 angeschlossen ist und von diesem Steuerbefehle erhalten und/oder an dieses Sensorsignale übermitteln kann. Bei dem zweiten streckenseitigen Feldgerät 60 kann es sich in vorteilhafter Weise um einen Achszähler, eine Signaleinrichtung oder eine Weiche handeln.

Die streckenseitigen Feldgeräte 30 und 60 umfassen zum Zwecke der Datenübermittlung jeweils ein Kommunikationsendgerät K, das an eine erste Anschlussseite 21 des Zwischengeräts 20 angeschlossen ist; die an die erste Anschlussseite 21 des Zwischengeräts 20 angeschlossenen Kommunikationsendgeräte K werden nachfolgend auch als interne Kommunikationsendgeräte K bezeichnet.

An eine zweite Anschlussseite 22 des Zwischengeräts 20 ist mittels des Kommunikationsnetzes 50 ein Kommunikationsendgerät K des Stellwerks 40 angeschlossen; das oder die an die zweite Anschlussseite 22 des Zwischengeräts 20 angeschlossenen Kommunikationsendgeräte werden nachfolgend auch als externe Kommunikationsendgeräte bezeichnet.

Die Funktion des Zwischengeräts 20 besteht darin, eine unverschlüsselte und ungeschützte Kommunikation zwischen den an der ersten Anschlussseite 21 angeschlossenen streckenseitigen Feldgeräten 30 und 60 und dem Zwischengerät 20 zu ermöglichen und eine verschlüsselte und/oder geschützte Kommunikation zwischen dem oder den an die zweite Anschlussseite 22 des Zwischengeräts 20 angeschlossenen Kommunikationsendgeräten, hier also dem Stellwerk 40, und dem Zwischengerät 20 zu gewährleisten.

Das Zwischengerät 20 ist vorzugsweise räumlich dichter an den Feldgeräten 30 und 60 positioniert als an dem Stellwerk 40, um die Länge der verschlüsselten und/oder geschützten Kommunikationsübertragung so groß wie möglich und damit die Länge der unverschlüsselten und/oder ungeschützten Kommunikationsübertragung so klein wie möglich zu gestalten; eine solche Anordnung reduziert die Möglichkeiten einer Manipulation von außen.

Das Zwischengerät 20 gemäß Figur 1 arbeitet vorzugsweise transparent und ist für die angeschlossenen Geräte nicht erkennbar. Darüber hinaus ist das Zwischengerät 20 vorzugsweise selbstkonfigurierend, sodass es ohne großen Aufwand auch nachträglich in bestehende technische Anlagen nachinstalliert werden kann.

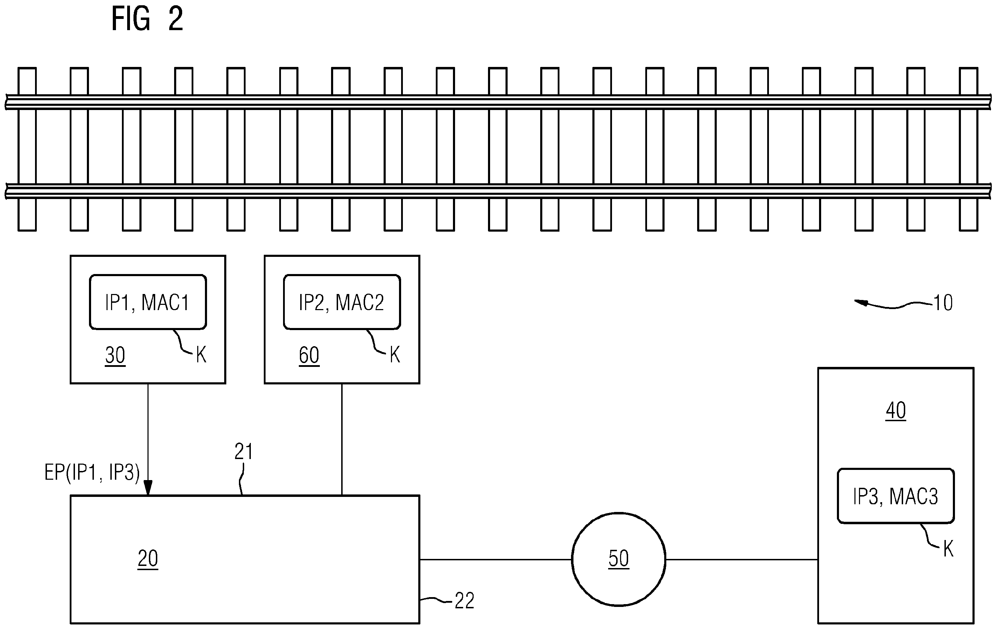

Eine bevorzugte Ausgestaltung bzw. Arbeitsweise des Zwischengeräts 20 soll nachfolgend im Zusammenhang mit den Figuren 2 bis 7 näher erläutert werden. Das Zwischengerät 20 umfasst vorzugsweise eine Recheneinrichtung und einen Speicher mit einem darin gespeicherten Steuerprogrammmodul, das bei Ausführung durch die Recheneinrichtung die nachfolgend beschriebene Arbeitsweise ermöglicht.

Die Figur 2 zeigt beispielhaft die Arbeitsweise des Zwischengeräts 20 bei Eingang eines ungesicherten und unverschlüsselten internetprotokollkompatiblen Eingangsdatenpakets EP, das von dem Kommunikationsendgerät K des ersten streckenseitigen Feldgeräts 30 stammt, an das Stellwerk 40 adressiert ist und als Senderadresse die Internetprotokolladresse IP1 des ersten streckenseitigen Feldgeräts 30 trägt.

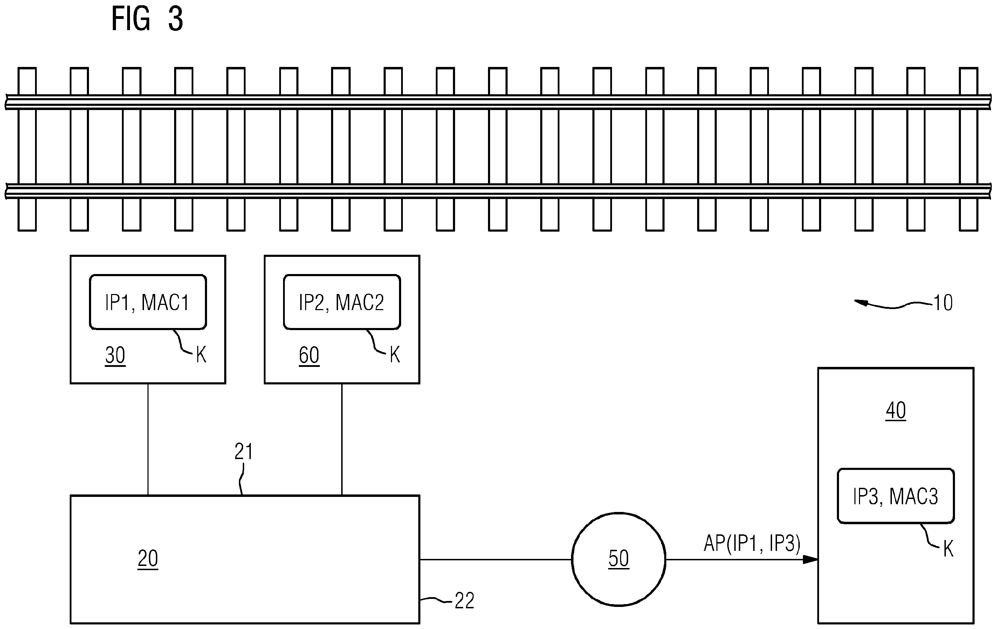

Das Zwischengerät 20 liest die Internetprotokolladresse IP1 des ersten streckenseitigen Feldgeräts 30 aus dem Eingangsdatenpaket EP aus und unterzieht das Eingangsdatenpaket EP einer Protokollumwandlung. Dabei wird ein protokollumgewandeltes Ausgangsdatenpaket AP erzeugt, das als Senderadresse die Internetprotokolladresse IP1 des streckenseitigen Feldgeräts 30, also nicht die Internetprotokolladresse des tatsächlich sendenden Zwischengeräts 20, trägt. Anschließend wird das protokollumgewandelte Ausgangsdatenpaket AP an das Stellwerk 40 gesendet (siehe Figur 3).

Die Protokollumwandlung umfasst vorzugsweise die Sicherung und/oder Verschlüsselung der Eingangsdatenpakete EP zwecks Erzeugung gesicherter und/oder verschlüsselter Ausgangsdatenpakete AP. Die Sicherung und/oder Verschlüsselung erfolgt vorzugsweise in der OSI-Schicht 5 oder höher.

Handelt es sich um TCP(Transmission Control Protocol)- oder UDP(User Datagram Protocol)-kompatible Eingangsdatenpakete EP, die an der ersten Anschlussseite 21 eingehen, so werden vorzugsweise TLS(Transport Layer Security)-kompatible Ausgangsdatenpakete AP erzeugt und an der zweiten Anschlussseite 22 ausgegeben.

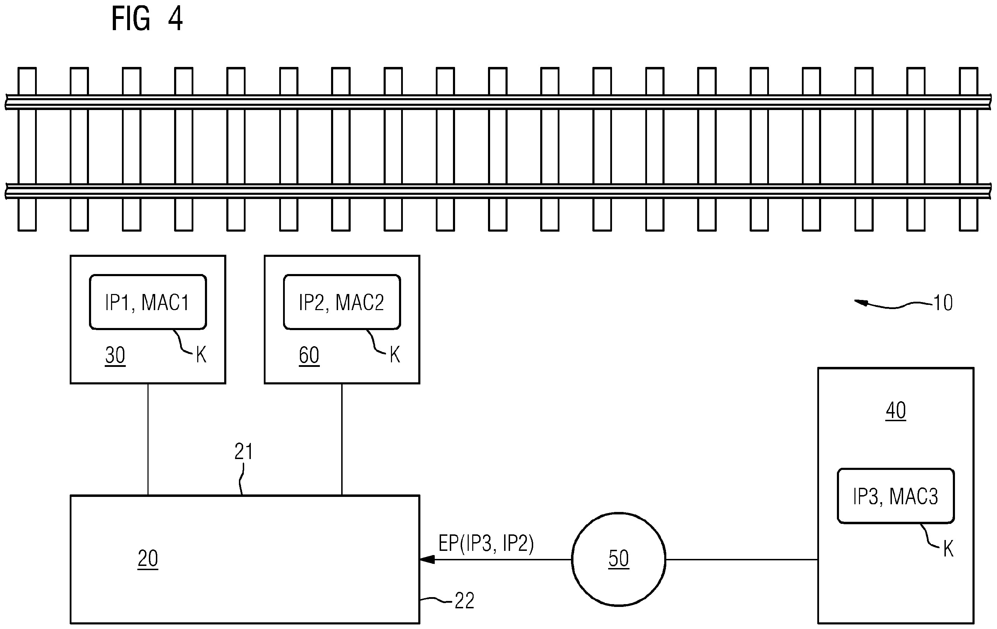

Die Figur 4 zeigt beispielhaft die Arbeitsweise des Zwischengeräts 20 bei Eingang eines internetprotokollkompatiblen Eingangsdatenpakets EP, das von dem an der zweiten Anschlussseite 22 angeschlossenen Kommunikationsendgerät K des Stellwerks 40 stammt und beispielsweise an das zweite streckenseitige Feldgerät 60 adressiert ist.

Das Zwischengerät 20 liest die Internetprotokolladresse IP3 des Stellwerks 40 aus dem Eingangsdatenpaket EP aus und unterzieht das Eingangsdatenpaket EP einer Protokollumwandlung.

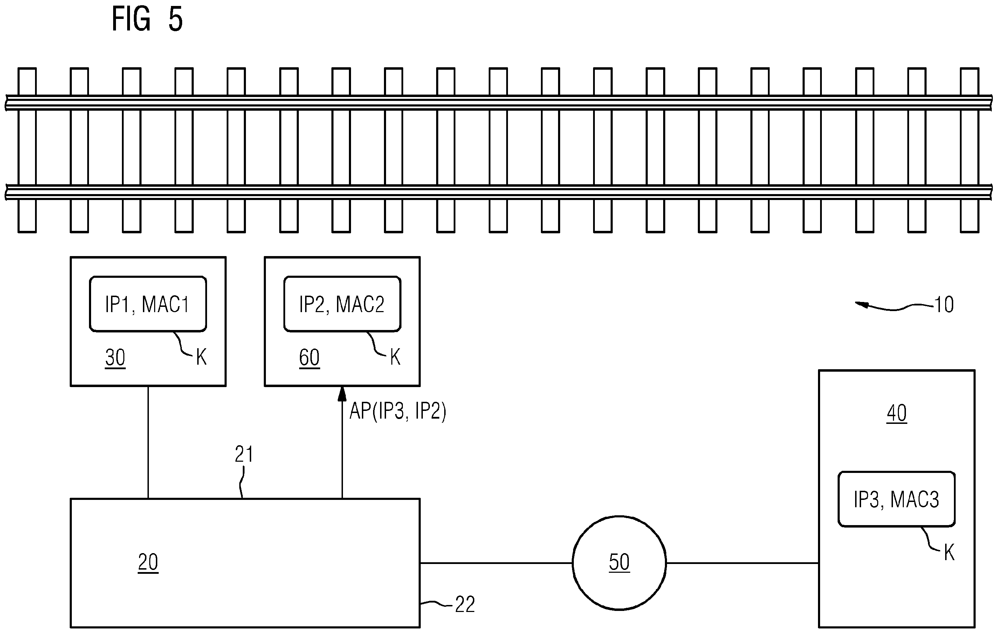

Dabei wird ein protokollumgewandeltes Ausgangsdatenpaket AP erzeugt, das als Internetprotokolladresse des Sendegeräts die Internetprotokolladresse IP3 des Stellwerks 40 trägt. Anschließend wird das protokollumgewandelte Ausgangsdatenpaket AP an das interne Kommunikationsendgerät K des zweiten streckenseitigen Feldgeräts 60 gesendet (vgl. Figur 5).

Die Protokollumwandlung umfasst die Entsicherung und/oder Entschlüsselung der Eingangsdatenpakete EP zwecks Erzeugung ungesicherter und unverschlüsselter Ausgangsdatenpakete AP, vorzugsweise in der OSI-Schicht 5 oder höher.

Handelt es sich um TLS-kompatible Eingangsdatenpakete EP, die an der zweiten Anschlussseite 22 eingehen, so werden vorzugsweise TCP- oder UDP-kompatible Ausgangsdatenpakete AP an der ersten Anschlussseite 21 ausgegeben.

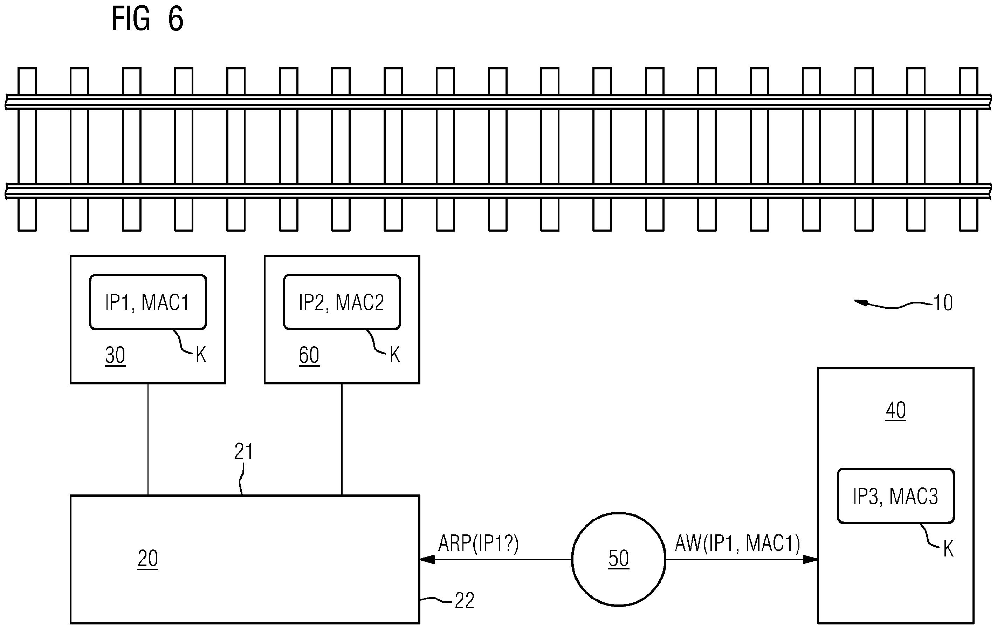

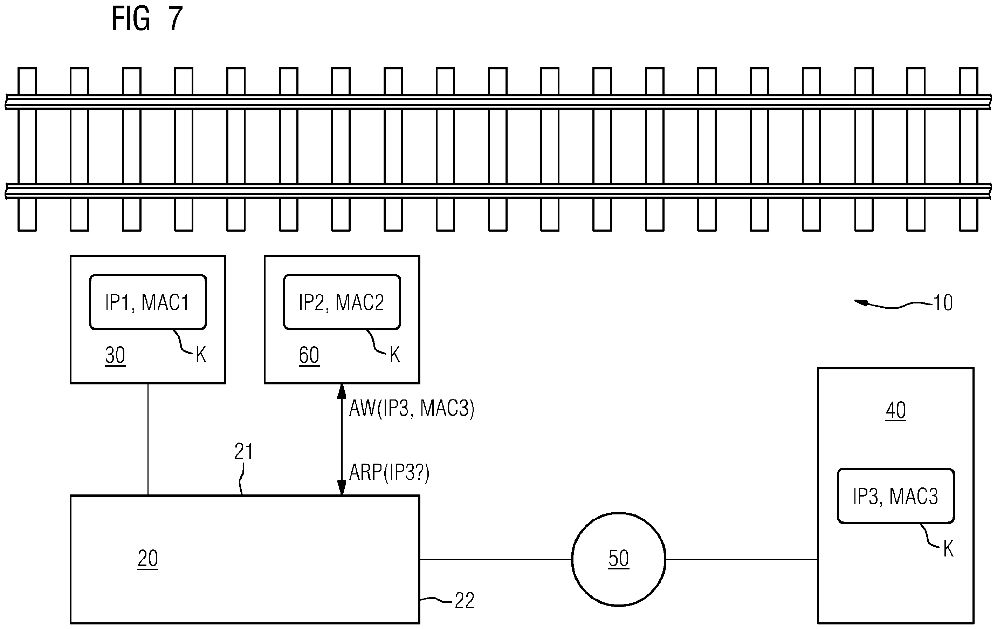

Die Figuren 6 und 7 zeigen beispielhaft die Arbeitsweise des Zwischengeräts 20 bei Eingang von Adresszuordnungsanfragen ARP gemäß "Address Resolution Protocol".

Empfängt das Zwischengerät 20 beispielsweise von dem externen Kommunikationsendgerät K des Stellwerks 40 auf seiner zweiten Anschlussseite 22 eine Adresszuordnungsanfrage ARP, die die Geräteadresse (MAC- Media Access Control Adresse) MAC1 des ersten streckenseitigen Feldgeräts 30 betrifft (siehe Figur 6), so leitet das Zwischengerät 20 diese externe Adresszuordnungsanfrage ARP als eigene Adresszuordnungsanfrage ARP an die an die erste Anschlussseite 21 angeschlossenen internen Kommunikationsendgeräte K weiter, sofern die in der jeweiligen Adresszuordnungsanfrage ARP enthaltene Internetprotokolladresse IP1 und/oder die der Internetprotokolladresse IP1 zugeordnete Geräteadresse MAC1 dem Zwischengerät 20 unbekannt bzw. noch unbekannt ist und eine Beantwortung der Adresszuordnungsanfrage ARP damit noch nicht sofort möglich ist.

Enthält das Zwischengerät 20 auf diese eigene Adresszuordnungsanfrage ARP eine Antwort AW des ersten streckenseitigen Feldgeräts 30, so leitet es die Antwort AW mit der Senderadresse des ersten streckenseitigen Feldgeräts 30 an das Stellwerk 40 weiter. Das Stellwerk 40 kann dabei nicht feststellen, dass die Antwort AW auf die Adresszuordnungsanfrage ARP tatsächlich von dem Zwischengerät 20 kommt und nicht von dem ersten streckenseitigen Feldgerät 30, da das Zwischengerät 20 mit der Senderadresse des Feldgeräts 30 sendet.

Empfängt das Zwischengerät 20 von einem internen Kommunikationsendgerät K des ersten oder zweiten streckenseitigen Feldgeräts, beispielsweise wie in Figur 7 gezeigt des zweiten streckenseitigen Feldgeräts 60, eine Adresszuordnungsanfrage ARP, die die Internetprotokolladresse IP3 des Stellwerks 40 oder die Geräteadresse MAC3 des Stellwerks 40 betrifft, so leitet es die Adresszuordnungsanfrage als eigene Adresszuordnungsanfrage ARP an der zweiten Anschlussseite 22 weiter, sofern die in der jeweiligen Adresszuordnungsanfrage ARP enthaltene Internetprotokolladresse IP3 und/oder die der Internetprotokolladresse IP3 zugeordnete Geräteadresse MAC3 dem Zwischengerät 20 unbekannt ist, wartet auf eine Antwort AW und leitet diese Antwort AW wieder weiter (siehe Figur 7); das zweite streckenseitige Feldgerät 60 kann dabei nicht feststellen, dass die Antwort AW auf die Adresszuordnungsanfrage ARP tatsächlich von dem Zwischengerät 20 kommt und nicht von dem Stellwerk 40.

Ist dem Zwischengerät 20 die Antwort AW auf die Adresszuordnungsanfrage ARP bereits bekannt, so antwortet es vorzugsweise unmittelbar.

Aufgrund seiner Fähigkeit, Adresszuordnungsanfragen zu generieren, kann sich das Zwischengerät 20 selbst konfigurieren, da es Internetprotokolladressen und den Internetprotokolladressen zugeordnete MAC-Geräteadressen auf der Basis selbst generierter Adresszuordnungsanfragen in Eigenregie ermitteln und damit an der ersten und zweiten Anschlussseite 21, 22 angeschlossene Geräte detektieren kann.

Vorteilhaft ist es, wenn das Zwischengerät 20, wie in Figur 1 angedeutet, in den protokollumgewandelten Ausgangsdatenpaketen AP jeweils seine eigene MAC-Adresse MAC4 angibt, unabhängig von der Internetprotokolladresse IP1, IP2 oder IP3, mit der es die Ausgangsdatenpakete AP aussendet; diese Vorgehensweise täuscht den angeschlossenen Komponenten eine andere Zuordnung zwischen Internetprotokolladressen und Geräteadressen vor, als sie der Realität entspricht und ermöglicht so in einfacher Weise eine datenflussmäßige Transparenz.

Auch ist es vorteilhaft, wenn das Zwischengerät 20 die Internetprotokolladressen IP1, IP2 und IP3 und die zugehörigen Geräteadressen MAC1, MAC2 und MAC3 der angeschlossenen Einrichtungen abspeichert, um auf Adresszuordnungsanfragen in der Zukunft verzichten zu können.

Das oben beispielhaft beschriebene Zwischengerät 20 kann einen Proxy bilden, bei dem die erste und zweite Anschlussseite 21, 22 jeweils zum Anschluss an ein Ethernet-Netzwerk ausgebildet sind. Das Zwischengerät 20 kann im sogenannten promiskuitiven Modus arbeiten und durch Spiegeln von Internetprotokolladressen von der ersten auf die zweite Anschlussseite 21, 22 und umgekehrt für beide Anschlussseiten transparent sein.

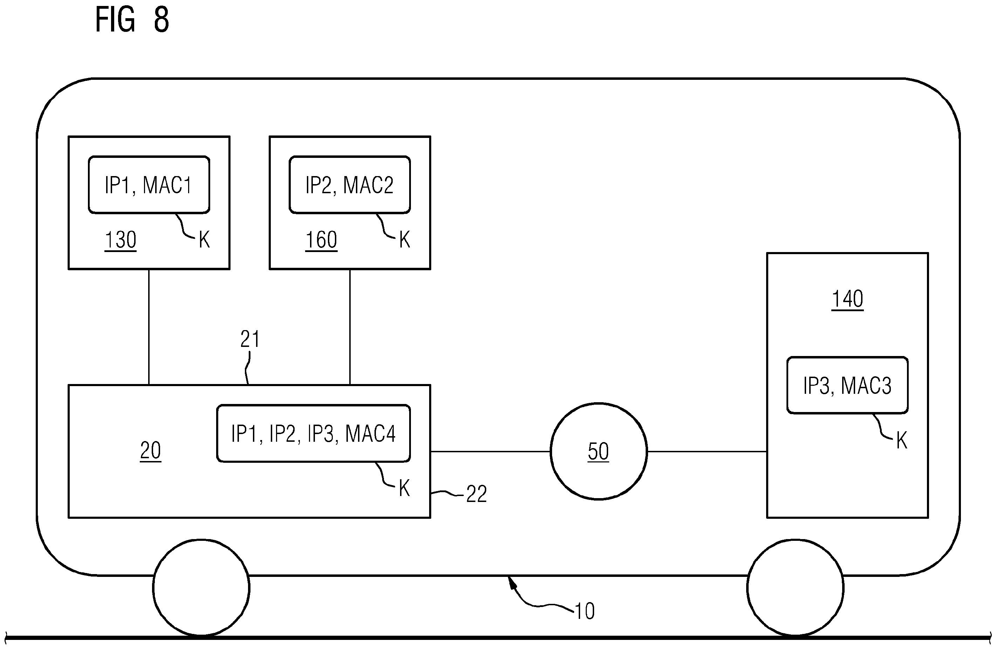

Die Figur 8 zeigt ein zweites Ausführungsbeispiel für eine erfindungsgemäße technische Anlage 10, die mit einem Ausführungsbeispiel für ein erfindungsgemäßes Zwischengerät 20 ausgestattet ist. Bei der technischen Anlage 10 handelt es sich um ein Eisenbahnschienenfahrzeug, das unter anderem ein oder mehr fahrzeugseitige Einrichtungen 130 und 160 umfasst, beispielsweise in Form von Aktoren oder Sensoren, die als erste Komponenten an die erste Anschlussseite 21 des Zwischengeräts 20 angeschlossen sind. Außerdem sind ein oder mehr fahrzeugseitige Einrichtungen vorhanden, die als zweite Komponenten an die zweite Anschlussseite 22 angeschlossen sind, beispielsweise ein Fahrzeugsteuergerät 140 und/oder ein Bremssteuergerät. Datenflussmäßig zwischen die erste und zweite Anschlussseite ist das Zwischengerät 20 geschaltet. Das Zwischengerät 20 ist vorzugsweise so ausgebildet, wie dies im Zusammenhang mit den Figuren 1 bis 7 beschrieben worden ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, welcher durch die Ansprüche definiert wird.

### Bezugszeichenliste

- 10: technische Anlage
- 20: Zwischengerät
- 21: erste Anschlussseite
- 22: zweite Anschlussseite
- 30: Feldgerät
- 40: Zentralgerät / Stellwerk
- 50: Kommunikationsnetz
- 60: Feldgerät
- 130: fahrzeugseitige Einrichtung
- 140: Fahrzeugsteuergerät
- 160: fahrzeugseitige Einrichtung

- AP: Ausgangsdatenpaket
- ARP: Adresszuordnungsanfrage
- AW: Antwort
- EP: Eingangsdatenpaket
- IP1: Internetprotokolladresse
- IP2: Internetprotokolladresse
- IP3: Internetprotokolladresse
- K: Kommunikationsendgerät
- MAC1: Geräteadresse
- MAC2: Geräteadresse
- MAC3: Geräteadresse
- MAC4: Geräteadresse

## Patentansprüche

1. Zwischengerät (20) mit einer ersten internetprotokollkompatiblen Anschlussseite (21) zum Anschluss an zumindest ein internes Kommunikationsendgerät (K) und einer zweiten internetprotokollkompatiblen Anschlussseite (22) zum Anschluss an ein externes Kommunikationsnetz (50) oder eine externe Kommunikationsleitung,
wobei
das Zwischengerät (20) derart ausgestaltet ist, dass es
- bei Eingang eines internetprotokollkompatiblen Eingangsdatenpakets (EP), das von dem zumindest einen internen Kommunikationsendgerät (K) stammt und an ein an das externe Kommunikationsnetz (50) angeschlossenes, externes internetprotokollkompatibles Kommunikationsendgerät (K) adressiert ist,
- die Internetprotokolladresse des internen Kommunikationsendgeräts (K) aus dem Eingangsdatenpaket (EP) ausliest,
- das Eingangsdatenpaket (EP) einer Protokollumwandlung unterzieht,
- ein protokollumgewandeltes Ausgangsdatenpaket (AP) erzeugt, das als Internetprotokolladresse des Sendegeräts die Internetprotokolladresse des internen Kommunikationsendgeräts (K) trägt, und
- das protokollumgewandelte Ausgangsdatenpaket (AP) an das externe Kommunikationsendgerät (K) sendet, und
- bei Eingang eines internetprotokollkompatiblen Eingangsdatenpakets (EP), das von einem an der zweiten Anschlussseite (22) angeschlossenen externen Kommunikationsendgerät (K) stammt und an das zumindest eine an die erste Anschlussseite (21) angeschlossene interne Kommunikationsendgerät (K) adressiert ist,
- die Internetprotokolladresse des externen Kommunikationsendgeräts (K) aus dem Eingangsdatenpaket (EP) ausliest,
- das Eingangsdatenpaket (EP) einer Protokollumwandlung unterzieht,
- ein protokollumgewandeltes Ausgangsdatenpaket (AP) erzeugt, das als Internetprotokolladresse des Sendegeräts die Internetprotokolladresse des externen Kommunikationsendgeräts (K) trägt, und
- das protokollumgewandelte Ausgangsdatenpaket (AP) an das interne Kommunikationsendgerät (K) sendet.

2. Zwischengerät (20) nach Anspruch 1,
**dadurch gekennzeichnet, dass**
- das Zwischengerät (20) einen Proxy bildet, bei dem die erste und zweite Anschlussseite (21, 22) zum Anschluss an ein Ethernet-Netzwerk ausgebildet sind, und
- das Zwischengerät (20) für beide Anschlussseiten transparent ist.

3. Zwischengerät (20) nach einem der voranstehenden Ansprüche,
**dadurch gekennzeichnet, dass**
- das Zwischengerät (20) im promiskuitiven Modus arbeitet und durch Spiegeln von Internetprotokolladressen von der ersten auf die zweite Anschlussseite (21, 22) und umgekehrt für beide Anschlussseiten transparent ist.

4. Zwischengerät (20) nach einem der voranstehenden Ansprüche,
**dadurch gekennzeichnet, dass**
das Zwischengerät (20) im Rahmen der Protokollumwandlung
- ungesicherte Eingangsdatenpakete (EP), die an der ersten Anschlussseite (21) eingehen, in gesicherte Ausgangsdatenpakete (AP) umwandelt und
- gesicherte Eingangsdatenpakete (EP), die an der zweiten Anschlussseite (22) eingehen, in ungesicherte Ausgangsdatenpakete (AP) umwandelt.

5. Zwischengerät (20) nach einem der voranstehenden Ansprüche,
**dadurch gekennzeichnet, dass**
das Zwischengerät (20) im Rahmen der Protokollumwandlung
- unverschlüsselte Eingangsdatenpakete (EP), die an der ersten Anschlussseite (21) eingehen, in verschlüsselte Ausgangsdatenpakete (AP) umwandelt und
- verschlüsselte Eingangsdatenpakete (EP), die an der zweiten Anschlussseite (22) eingehen, in unverschlüsselte Ausgangsdatenpakete (AP) umwandelt.

6. Zwischengerät (20) nach einem der voranstehenden Ansprüche,
**dadurch gekennzeichnet, dass**
- das Zwischengerät (20) im Rahmen der Protokollumwandlung eine Sicherung oder Verschlüsselung sowie eine Entsicherung oder Entschlüsselung von Eingangsdatenpaketen (EP) in der OSI-Schicht 5 oder höher durchführt.

7. Zwischengerät (20) nach einem der voranstehenden Ansprüche,
**dadurch gekennzeichnet, dass**
das Zwischengerät (20) im Rahmen der Protokollumwandlung
- TCP- oder UDP-kompatible Eingangsdatenpakete (EP), die an der ersten Anschlussseite (21) eingehen, in TLS-kompatible Ausgangsdatenpakete (AP) umwandelt und
- TLS-kompatible Eingangsdatenpakete (EP), die an der zweiten Anschlussseite (22) eingehen, in TCP- oder UDP-kompatible Ausgangsdatenpakete (AP) umwandelt.

8. Zwischengerät (20) nach einem der voranstehenden Ansprüche,
**dadurch gekennzeichnet, dass**
das Zwischengerät (20) im Rahmen der Protokollumwandlung
- Adresszuordnungsanfragen (ARP) gemäß "Address Resolution Protocol" von internen Kommunikationsendgeräten (K) als eigene Adresszuordnungsanfragen (ARP) an externe Kommunikationsendgeräte (K) weiterleitet, sofern die in der jeweiligen Adresszuordnungsanfrage (ARP) enthaltene Internetprotokolladresse und/oder zugehörige Geräteadresse dem Zwischengerät (20) unbekannt ist, und
- Adresszuordnungsanfragen (ARP) von externen Kommunikationsendgeräten (K) als eigene Adresszuordnungsanfragen (ARP) an die internen Kommunikationsendgeräte (K) weiterleitet, sofern die in der jeweiligen Adresszuordnungsanfrage (ARP) enthaltene Internetprotokolladresse und/oder zugehörige Geräteadresse dem Zwischengerät (20) unbekannt ist.

9. Zwischengerät (20) nach einem der voranstehenden Ansprüche,
**dadurch gekennzeichnet, dass**
das Zwischengerät (20) selbstkonfigurierend ist und die an der ersten Anschlussseite (21) angeschlossenen internen Kommunikationsendgeräte (K) und deren Internetprotokolladressen auf der Basis selbst generierter Adresszuordnungsanfragen (ARP) selbst ermittelt.

10. Zwischengerät (20) nach einem der voranstehenden Ansprüche,
**dadurch gekennzeichnet, dass** Anschlussports der ersten und zweiten Anschlussseite (21, 22) jeweils wahlweise als Server- und Client-Port konfigurierbar sind.

11. Technische Anlage (10) mit einer ersten Komponente und einer davon räumlich getrennten zweiten Komponente, die jeweils ein internetprotokollkompatibles Kommunikationsendgerät (K) aufweisen und über ein externes Kommunikationsnetz (50) oder eine externe Kommunikationsleitung in Verbindung stehen, wobei die technische Anlage zudem ein Zwischengerät (20) nach einem der voranstehenden Ansprüche umfasst, welches datenübertragungsmäßig zwischen die Kommunikationsendgeräte (K) der ersten und zweiten Komponente angeschlossen ist.

12. Technische Anlage (10) nach Anspruch 11,
**dadurch gekennzeichnet, dass**
- die technische Anlage (10) eine eisenbahntechnische Anlage (10) ist,
- die erste Komponente ein streckenseitiges eisenbahntechnisches Feldgerät (30) ist und das Kommunikationsendgerät (K) der ersten Komponente an eine erste Anschlussseite (21) des Zwischengeräts (20) angeschlossen ist und
- die zweite Komponente ein streckenseitiges eisenbahntechnisches Zentralgerät, insbesondere ein Stellwerk (40), ist und das Kommunikationsendgerät (K) der zweiten Komponente an eine zweite Anschlussseite (22) des Zwischengeräts (20) angeschlossen ist.

13. Technische Anlage (10) nach Anspruch 11,
**dadurch gekennzeichnet, dass**
- die technische Anlage (10) ein Eisenbahnschienenfahrzeug ist,
- die erste Komponente eine erste schienenfahrzeugseitige Einrichtung ist und das Kommunikationsendgerät (K) der ersten schienenfahrzeugseitigen Einrichtung an eine erste Anschlussseite (21) des Zwischengeräts (20) angeschlossen ist und
- die zweite Komponente eine zweite schienenfahrzeugseitige Einrichtung, insbesondere ein Fahrzeugsteuergerät (140), ist und das Kommunikationsendgerät (K) der zweiten Komponente an eine zweite Anschlussseite (22) des Zwischengeräts (20) angeschlossen ist.

14. Verfahren zum Betreiben eines Zwischengeräts (20), das mit einer ersten internetprotokollkompatiblen Anschlussseite (21) an zumindest ein internes Kommunikationsendgerät (K) und mit einer zweiten internetprotokollkompatiblen Anschlussseite (22) an ein externes Kommunikationsnetz (50) oder eine externe Kommunikationsleitung angeschlossen ist,
wobei
- bei Eingang eines internetprotokollkompatiblen Eingangsdatenpakets (EP), das von dem zumindest einen internen Kommunikationsendgerät (K) stammt und an ein an das externe Kommunikationsnetz (50) angeschlossenes, externes internetprotokollkompatibles Kommunikationsendgerät (K) adressiert ist,
- die Internetprotokolladresse des internen Kommunikationsendgeräts (K) aus dem Eingangsdatenpaket (EP) ausgelesen wird,
- das Eingangsdatenpaket (EP) einer Protokollumwandlung unterzogen wird,
- ein protokollumgewandeltes Ausgangsdatenpaket (AP) erzeugt wird, das als Internetprotokolladresse des Sendegeräts die Internetprotokolladresse des internen Kommunikationsendgeräts (K) trägt, und
- das protokollumgewandelte Ausgangsdatenpaket (AP) an das externe Kommunikationsendgerät (K) gesendet wird, und
- bei Eingang eines internetprotokollkompatiblen Eingangsdatenpakets (EP), das von einem an der der zweiten Anschlussseite (22) angeschlossenen externen Kommunikationsendgerät (K) stammt und an das zumindest eine an die erste Anschlussseite (21) angeschlossene interne Kommunikationsendgerät (K) adressiert ist,
- die Internetprotokolladresse des externen Kommunikationsendgeräts (K) aus dem Eingangsdatenpaket (EP) ausgelesen wird,
- das Eingangsdatenpaket (EP) einer Protokollumwandlung unterzogen wird,
- ein protokollumgewandeltes Ausgangsdatenpaket (AP) erzeugt wird, das als Internetprotokolladresse des Sendegeräts die Internetprotokolladresse des externen Kommunikationsendgeräts (K) trägt, und
- das protokollumgewandelte Ausgangsdatenpaket (AP) an das interne Kommunikationsendgerät (K) gesendet wird.

## Claims

1. Intermediary device (20) with a first internet protocol-compatible connection side (21) for connecting to at least one internal communication terminal (K) and a second internet protocol-compatible connection side (22) for connecting to an external communication network (50) or an external communication line,
wherein
the intermediary device (20) is embodied such that
- on receipt of an internet protocol-compatible input data package (EP), which originates from the at least one internal communication terminal (K) and is addressed to an external internet protocol-compatible communication terminal (K) which is connected to the external communication network (50),
- it reads the internet protocol address of the internal communication terminal (K) from the input data package (EP),
- it subjects the input data package (EP) to a protocol conversion,
- it generates a protocol-converted output data package (AP) which carries the internet protocol address of the internal communication terminal (K) as the internet protocol address of the transmit device, and
- it sends the protocol converted output data package (AP) to the external communication terminal (K), and
- on receipt of an internet protocol-compatible input data package (EP), which originates from an external communication terminal (K) which is connected to the second connection side (22) and is addressed to the at least one internal communication terminal (K) connected to the first connection side (21),
- it reads the internet protocol address of the external communication terminal (K) from the input data package (EP),
- it subjects the input data package (EP) to a protocol conversion,
- it generates a protocol-converted output data package (AP) which carries the internet protocol address of the external communication device (K) as the internet protocol address of the transmit device, and
- sends the protocol-converted output data package (AP) to the internal communication terminal (K).

2. Intermediary device (20) according to claim 1,
**characterised in that**
- the intermediary device (20) forms a proxy, in which the first and second connection side (21, 22) is designed to connect to an ethernet network, and
- the intermediary device (20) is transparent for both connection sides.

3. Intermediary device (20) according to one of the preceding claims,
**characterised in that**
- the intermediary device (20) works in promiscuous mode and is transparent by way of mirroring internet protocol addresses from the first to the second connection side (21, 22) and conversely for both connection sides.

4. Intermediary device (20) according to one of the preceding claims,
**characterised in that**
in the context of protocol conversion, the intermediary device (20)
- converts unsecure input data packages (EP) which enter at the first connection side (21) into secure output data packages (AP) and
- converts secure input data packages (EP) which enter at the second connection side (22) into unsecure output data packages (AP).

5. Intermediary device (20) according to one of the preceding claims,
**characterised in that**
in the context of protocol conversion, the intermediary device (20)
- converts unencrypted input data packages (EP) which enter at the first connection side (21) into encrypted output data packages (AP) and
- converts encrypted input data packages (EP) which enter at the second connection side (22) into unencrypted output data packages (AP).

6. Intermediary device (20) according to one of the preceding claims,
**characterised in that**
- in the context of protocol conversion, the intermediary device (20) carries out a locking or encryption and an unlocking or decryption of input data packages (EP) in the OSI level 5 or higher.

7. Intermediary device (20) according to one of the preceding claims,
**characterised in that**
in the context of protocol conversion, the intermediary device (20)
- converts TCP- or UDP-compatible input data packages (EP), which enter at the first connection side (21), into TLS-compatible output data packages (AP) and
- converts TLS-compatible input data packages (EP), which enter at the second connection side (22), into TCP- or UDP-compatible output data packages (AP).

8. Intermediary device (20) according to one of the preceding claims,
**characterised in that**
in the context of protocol conversion, the intermediary device (20)
- forwards address assignment queries (ARP) in accordance with "Address Resolution Protocol" from internal communication terminals (K) as individual address assignment queries (ARP) to external communication terminals (K), as long as the internet protocol address and/or associated device address contained in the respective address assignment query (ARP) is unknown to the intermediary device (20), and
- forwards address assignment queries (ARP) from external communication terminals (K) as individual address assignment queries (ARP) to the internal communication terminals (K), as long as the internet protocol address and/or associated device address contained in the respective address assignment query (ARP) is unknown to the intermediary device (20).

9. Intermediary device (20) according to one of the preceding claims,
**characterised in that**
the intermediary device (20) is self-configuring and the internal communication terminals (k) and their internet protocol addresses connected to the first connection side (21) are self-determined on the basis of self-generated address assignment queries (ARP).

10. Intermediary device (20) according to one of the preceding claims,
**characterised in that**
connection ports of the first and second connection side (21, 22) can be selectively configured as server and client port respectively.

11. Technical installation (10) with a first component and a second component spatially separated therefrom, each of which have an internet protocol-compatible communication terminal (K) and are connected via an external communication network (50) or an external communication line, wherein the technical installation additionally comprises an intermediary device (20) according to one of the preceding claims, which is connected in terms of data transfer between the communication terminals (K) of the first and second component.

12. Technical installation (10) according to claim 11,
**characterised in that**
- the technical installation (10) is a railway installation (10),
- the first component is a track-side railway field device (30) and the communication terminal (K) of the first component is connected to a first connection side (21) of the intermediary device (20) and
- the second component is a track-side railway central device, in particular a signal box (40) and the communication terminal (K) of the second component is connected to a second connection side (22) of the intermediary device (20).

13. Technical installation according to claim 11,
**characterised in that**
- the technical installation (10) is a railway vehicle,
- the first component is a first rail vehicle-side facility and the communication terminal (K) of the first rail vehicle-side facility is connected to a first connection side (21) of the intermediary device (20) and
- the second component is a second rail vehicle-side facility, in particular a vehicle control device (140) and the communication terminal (K) of the second component is connected to a second connection side (22) of the intermediary device (20).

14. Method for operating an intermediary device (20), which is connected with a first internet protocol-compatible connection side (21) to at least one internal communication terminal (K) and with a second internet protocol-compatible connection side (22) to an external communication network (50) or an external communication line,
wherein
- on receipt of an internet protocol-compatible input data package (EP), which originates from the at least one internal communication terminal (K) and is addressed to an external internet protocol-compatible communication terminal (K) connected to the external communication network (50),
- the internet protocol address of the internal communication terminal (K) is read from the input data package (EP),
- the input data package (EP) is subjected to a protocol conversion,
- a protocol-converted output data package (AP) is generated which carries the internet protocol address of the internal communication terminal (K) as the internet protocol address of the transmit device, and
- the protocol-converted output data package (AP) is sent to the external communication terminal (K), and
- on receipt of an internet protocol-compatible input data package (EP), which originates from an external communication terminal (K) connected to the second connection side (22) and is addressed to the at least one internal communication terminal (K) connected to the first connection side (21),
- the internet protocol address of the external communication terminal (K) is read from the input data package (EP)
- the input data package (EP) is subjected to a protocol conversion,
- a protocol-converted output data package (AP) is generated, which carries the internet protocol address of the external communication terminal (K) as the internet protocol address of the transmit device, and
- the protocol-converted output data package (AP) is sent to the internal communication terminal (K).

## Revendications

1. Appareil (20) intermédiaire comprenant un côté (21) de connexion compatible avec un premier protocole internet pour la connexion à au moins un terminal (K) de communication interne et un deuxième côté (22) de connexion compatible avec un protocole internet pour la connexion à un réseau (50) de communication externe ou à une ligne de communication externe,
dans lequel
l'appareil (20) intermédiaire est conformé de manière à ce qu'il,
- à l'entrée d'un paquet (EP) de données d'entrée compatible avec un protocole internet, qui provient du au moins un terminal (K) de communication interne et qui est adressé à un terminal (K) de communication compatible avec un protocole internet externe raccordé au réseau (50) de communication externe,
- lise l'adresse du protocole internet du terminal (K) de communication interne dans le paquet (EP) de données d'entrée,
- soumette le paquet (EP) de données d'entrée à une transformation de protocole,
- produise un paquet (AP) de données de sortie transformé en protocole, qui porte, comme adresse de protocole internet de l'appareil émetteur, l'adresse de protocole internet du terminal (K) de communication interne, et
- envoie le paquet (AP) de données de sortie transformé en protocole au terminal (K) de communication externe, et
- à l'entrée d'un paquet (EP) de données d'entrée compatible avec un protocole internet, qui provient d'un terminal (K) de communication externe raccordé au deuxième côté (22) de connexion et est adressé à au moins un terminal (K) de communication interne raccordé au premier côté (21) de connexion,
- lise l'adresse du protocole internet du terminal (K) de communication externe dans le paquet (EP) de données d'entrée,
- soumette le paquet (EP) de données d'entrée à une transformation de protocole,
- produise un paquet (AP) de données de sortie, transformé en protocole, qui porte, comme adresse du protocole internet de l'appareil émetteur, l'adresse de protocole internet du terminal (K) de communication externe, et
- envoie le paquet (AP) de données de sortie, transformé en protocole, au terminal (K) de communication interne.

2. Appareil (20) intermédiaire suivant la revendication 1, **caractérisé en ce que**
- l'appareil (20) intermédiaire forme un proxy, dans lequel les premier et deuxième côtés (21, 22) de connexion sont constitués pour la connexion à un réseau éthernet, et
- l'appareil (20) intermédiaire est transparent pour les deux côtés de connexion.

3. Appareil (20) intermédiaire suivant l'une des revendications précédentes,
**caractérisé en ce que**
- l'appareil (20) intermédiaire travaille en mode de promiscuité et est transparent par envoi en miroir d'adresses du protocole internet du premier au deuxième côtés (21, 22) de connexion et inversement pour les deux côtés de connexion.

4. Appareil (20) intermédiaire suivant l'une des revendications précédentes,
**caractérisé en ce que**
l'appareil (20) intermédiaire, dans le cadre de la transformation de protocole,
- transforme, en des paquets (AP) de données de sortie sécurisés, des paquets (EP) de données d'entrée non sécurisés, qui entrent sur le premier côté (21) de connexion, et
- transforme, en des paquets (AP) de données de sortie non sécurisés, des paquets (EP) de données d'entrée sécurisés, qui entrent sur le deuxième côté (22) de connexion.

5. Appareil (20) intermédiaire suivant l'une des revendications précédentes,
**caractérisé en ce que**
l'appareil (20) intermédiaire, dans le cadre de la transformation de protocole,
- transforme, en des paquets (AP) de données de sortie chiffrés, des paquets (EP) de données d'entrée non chiffrés, qui entrent sur le premier côté (21) de connexion, et
- transforme, en des paquets (AP) de données de sortie non chiffrés, des paquets (EP) de données d'entrée chiffrés, qui entrent sur le deuxième côté (22) de connexion.

6. Appareil (20) intermédiaire suivant l'une des revendications précédentes,
**caractérisé en ce que**
- l'appareil (20) intermédiaire, dans le cadre de la transformation de protocole, effectue, dans la couche OSI 5 ou plus haute, une sécurisation ou un chiffrement ainsi qu'une désécurisation ou un déchiffrement de paquets (EP) de données d'entrée.

7. Appareil (20) intermédiaire suivant l'une des revendications précédentes,
**caractérisé en ce que**
l'appareil (20) intermédiaire, dans le cadre de la transformation de protocole,
- transforme, en des paquets (AP) de données de sortie compatibles TLS, des paquets (EP) de données d'entrée compatibles TCP ou UDP, qui entrent sur le premier côté (21) de connexion, et
- transforme, en des paquets (AP) de données de sortie compatibles TCP ou UDP, des paquets (EP) de données d'entrée compatibles TLS, qui entrent sur le deuxième côté (22) de connexion.

8. Appareil (20) intermédiaire suivant l'une des revendications précédentes,
**caractérisé en ce que**
l'appareil (20) intermédiaire, dans le cadre de la transformation de protocole,
- achemine, de terminaux (K) de communication internes à des terminaux (K) de communication externes, comme demandes (ARP) d'association d'adresses propres, des demandes (ARP) d'association d'adresses suivant « Adress Resolution Protocol », dans la mesure où les adresses de protocole internet contenues dans la demande (ARP) d'association d'adresses respective et/ou l'adresse d'appareil lui appartenant est inconnue de l'appareil (20) intermédiaire, et
- achemine, de terminaux (K) de communication externes aux terminaux (K) de communication internes, comme demandes (ARP) d'association d'adresses propres, des demandes (ARP) d'association d'adresses, dans la mesure où l'adresse de protocole internet contenue dans la demande (ARP) d'association d'adresses respective et/ou l'adresse d'appareil, qui lui appartient, est inconnue de l'appareil (20) intermédiaire.

9. Appareil (20) intermédiaire suivant l'une des revendications précédentes,
**caractérisé en ce que**
l'appareil (20) intermédiaire est à autoconfiguration et détermine soi-même, sur la base de demandes (ARP) d'association d'adresses crées elles-mêmes, les terminaux (K) de communication internes raccordés au premier côté (21) de connexion et leurs adresses de protocole internet.

10. Appareil (20) intermédiaire suivant l'une des revendications précédentes,
**caractérisé en ce que**
des accès de connexion du premier et du deuxième côtés (21, 22) de connexion peuvent être configurés respectivement au choix comme accès serveur et accès client.

11. Installation (10) technique comprenant un premier composant et un deuxième composant, qui en est séparé dans l'espace, qui ont chacun un terminal (K) de communication compatible avec un protocole internet et qui sont en liaison par un réseau (50) de communication externe ou une ligne de communication externe, dans laquelle l'installation technique comprend en outre un appareil (20) intermédiaire suivant l'une des revendications précédentes, qui est raccordé en transmission de données entre les terminaux (K) de communication du premier et du deuxième composants.

12. Installation (10) technique suivant la revendication 11, **caractérisée en ce que**
- l'installation (10) technique est une installation (10) de la technique des chemins de fer, et
- le premier composant est un appareil (30) sur site de la technique des chemins de fer sur la voie et le terminal (K) de communication du premier composant est connecté à un premier côté (21) de connexion de l'appareil (20) intermédiaire, et
- le deuxième composant est un appareil central de la technique des chemins de fer sur la voie, en particulier un poste (40) d'aiguillage, et le terminal (K) de communication du deuxième composant est connecté à un deuxième côté (22) de connexion de l'appareil (20) intermédiaire.

13. Installation (10) technique suivant la revendication 11, **caractérisée en ce que**
- l'installation (10) technique est un véhicule ferroviaire,
- le premier composant est un premier dispositif embarqué sur véhicule ferroviaire et le terminal (K) de communication du premier dispositif embarqué sur véhicule ferroviaire est connecté à un premier côté (21) de connexion de l'appareil (20) intermédiaire, et
- le deuxième composant est un deuxième dispositif embarqué sur véhicule ferroviaire, en étant en particulier un appareil (140) de commande de véhicule, et le terminal (K) de communication du deuxième composant est connecté au deuxième côté (22) de connexion de l'appareil (20) intermédiaire.

14. Procédé pour faire fonctionner un appareil (20) intermédiaire, qui est connecté par un premier côté (21) de connexion compatible avec un protocole internet à au moins un terminal (K) de communication interne et par un deuxième côté (22) de connexion compatible avec un protocole internet à un réseau (50) de communication externe ou à une ligne de communication externe,
dans lequel,
- à l'entrée d'un paquet (EP) de données d'entrée compatible avec un protocole internet, qui provient du au moins un terminal (K) de communication interne et qui est adressé à un terminal (K) de communication compatible avec un protocole internet externe, raccordé au réseau (50) de communication externe,
- on lit l'adresse de protocole internet du terminal (K) de communication interne dans le paquet (EP) de données d'entrée,
- on soumet le paquet (EP) de données d'entrée à une transformation de protocole,
- on produit un paquet (AP) de données de sortie transformé en protocole, qui porte, comme adresse de protocole internet de l'appareil d'émission, l'adresse de protocole internet du terminal (K) de communication interne,
- on envoie le paquet (AP) de données de sortie transformé en protocole au terminal (K) de communication externe, et
- à l'entrée d'un paquet (EP) de données d'entrée compatible avec un protocole internet, qui provient d'un terminal (K) de communication externe raccordé au deuxième côté (22) de connexion et est adressé à au moins un terminal (K) de communication interne raccordé au premier côté (21) de connexion,
- on lit l'adresse de protocole internet du terminal (K) de communication externe dans le paquet (EP) de données d'entrée,
- on soumet le paquet (EP) de données d'entrée à une transformation de protocole,
- on produit un paquet (AP) de données de sortie, transformé en protocole, qui porte, comme adresse du protocole internet de l'appareil d'émission, l'adresse de protocole internet du terminal (K) de communication externe, et
- on envoie le paquet (AP) de données de sortie, transformé en protocole, au terminal (K) de communication interne.
